Europäisches Patentamt

European Patent Office

Office européen des brevets

(19)

(11) Publication number: **0 266 013**
**A2**

## (12) EUROPEAN PATENT APPLICATION

(21) Application number: 87202075.5

(51) Int. Cl.⁴: **A01J 25/15**

(22) Date of filing: 28.10.87

(30) Priority: 29.10.86 NL 8602714

(43) Date of publication of application:
04.05.88 Bulletin 88/18

(84) Designated Contracting States:
AT BE CH DE ES FR GB GR IT LI LU NL SE

(71) Applicant: **P & F Hubert Industries CV**
**Postbus 59**
**NL-8600 AB Sneek(NL)**

(72) Inventor: **Reinders, Eize**
**Aggemastate 25**
**NL-8926 PA Leeuwarden(NL)**

(74) Representative: **Noz, Franciscus Xaverius, Ir.**
**et al**
**Algemeen Octrooibureau P.O. Box 645**
**NL-5600 AP Eindhoven(NL)**

(54) **Device for pressing cheeses.**

(57) Device for pressing cheeses, provided with a
frame (1,2) and with means (13) for moving vats
(10) filled with curd and followers (12) placed on the
vats through the device, whereby a supporting
mechanism (3,4) for the vats (10) is provided in the
frame along which supporting mechanism (3,4) the
vats (10) can be moved through the frame, whilst
above the supporting mechanism there is provided a
second supporting mechanism (6,7) for supporting
the followers (12), which can be moved along under
said second supporting mechanism (6,7) whereby
the construction is such that over at least part of the
length of said supporting mechanisms (3,4;6,7) the
distance between the supporting mechansims gradu-
ally decreases.

FIG.2.

## Device for pressing cheeses

The invention relates to a device for pressing cheeses, provided with a frame and with means for moving vats filled with curd and followers placed on the vats through the device.

With usual devices for pressing cheeses the vats filled with curd are generally put into the device after which pressing takes place during the required time, whilst the vats are stationary inside the device.

This implies, therefore, that after a certain number of vats has been put into the device it will not be possible to remove said vats from the device again until after some time. In order to obtain a certain adaptation of the further course of the process from milk to cheese yet this usually requires the use of several pressing devices as well as means for intermediate storage of the product to be processed.

According to the invention a supporting mechanism for the vats is now provided in the frame along which supporting mechanism the vats can be moved through the frame, whilst above the supporting mechanism there is provided a second supporting mechanism for supporting the followers, which can be moved along under said second supporting mechanism, whereby the construction is such that over at least part of the length of said supporting mechanisms the distance between the supporting mechansims gradually decreases.

When using the device according to the invention it will be possible to continually supply vats with followers placed thereon from one end of the device and gradually move said vats through the device, whereby at least during the first part of the movement of the vats through the device the pressure on the curd inside the vats is gradually increased because the distance between the supporting means by which the vats and the followers are being supported gradually decreases.

The invention will be explained in mrore detail hereinafter with reference to an embodiment of a device according to the invention diagrammatically illustrated in the accompanying figures.

Fig 1 is a side view of the device.

Fig 2 is a cross-section of fig. 1.

The device is provided with a frame comprising a number of vertical columns 1 which are mutually connected by cross beams 2.

In the illustrated embodiment the cross beams support three beams 3 extending in the longitudinal direction of the device, said beams supporting a large number of rolls 4, which are freely rotatable about horizontal axes of rotation extending perpendicularly to the longitudinal axis of the device.

At some distance above the beams 3 there are provided beams 6, extending into the longitudinal direction of the device and being supported by cross beams 5, said beams 6 also supporting rolls 7 which are freely rotatable about horizontal axes of rotation extending perpendicularly to the longitudinal direction of the device. The beams 5 are suspended from a cross beam 2, inflatable bellows 8 being interposed.

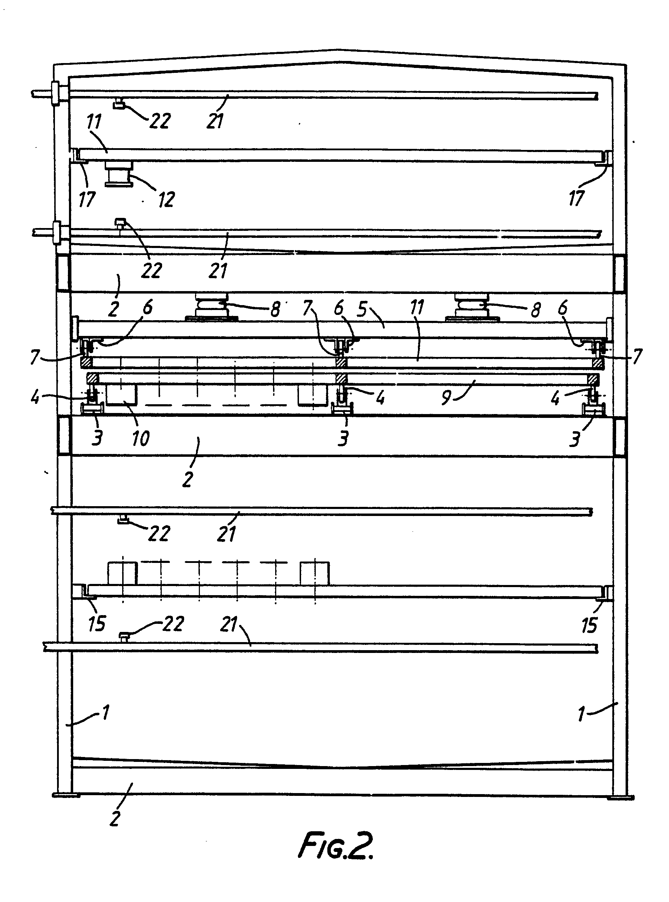

The rolls 4 form a supporting mechanism for plates 9 to be moved through the device, said plates each being provided with a pair of rows of cheese vats 10. As will be apparent from fig 2 the plates are thereby supported by the rolls 4 near their outer ends and near their centres.

In a similar manner the rolls 7 serve to support the plates 11 moving under said rolls, said plates being provided with followers 12 fitting in the vats 10.

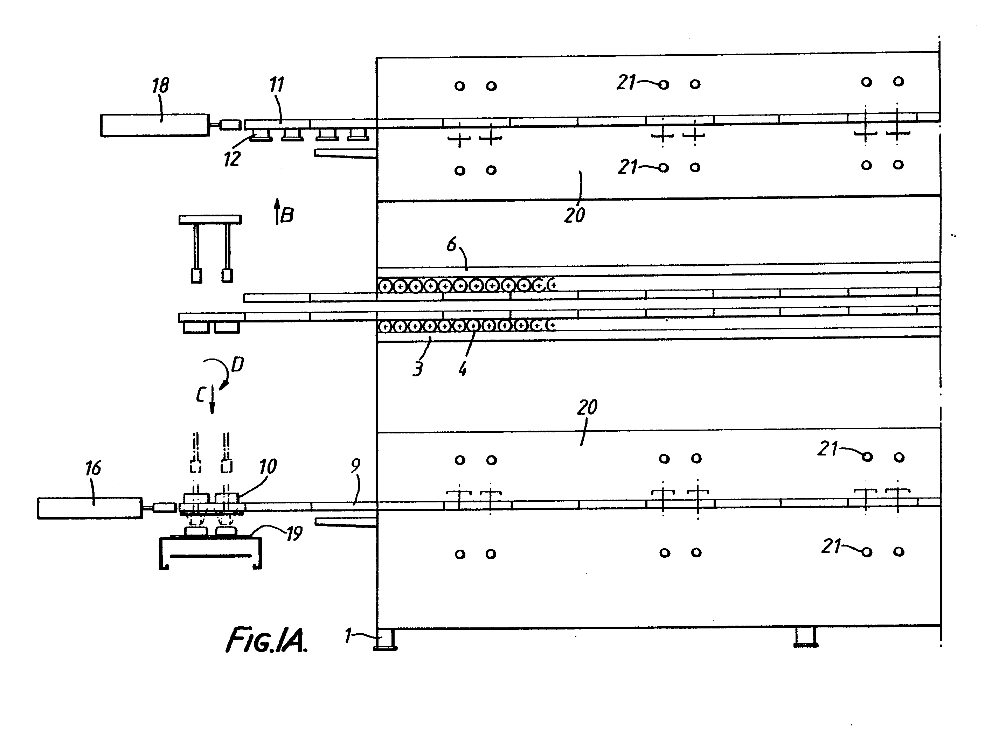

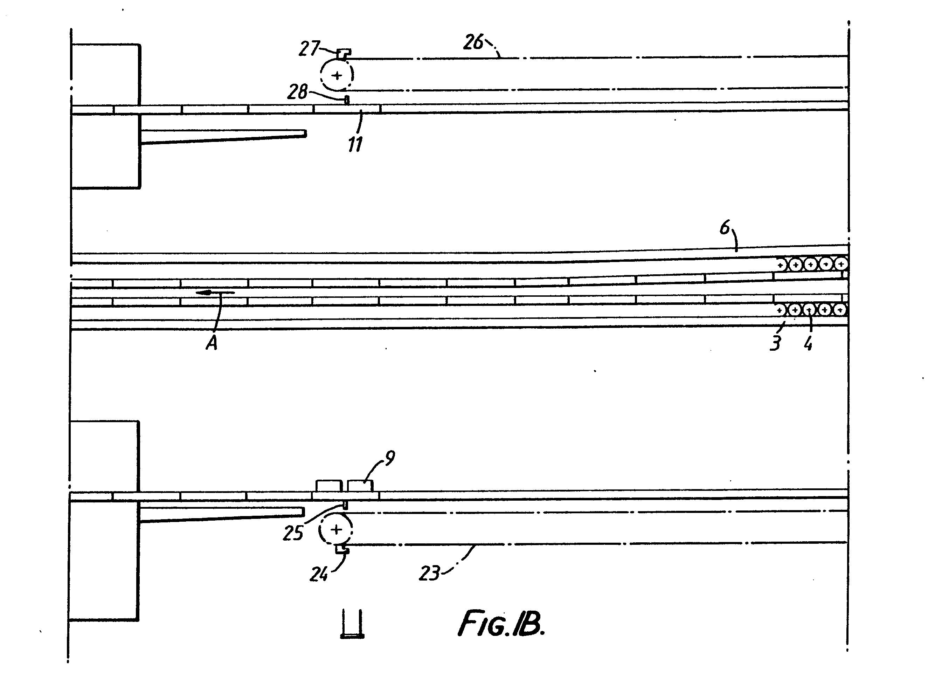

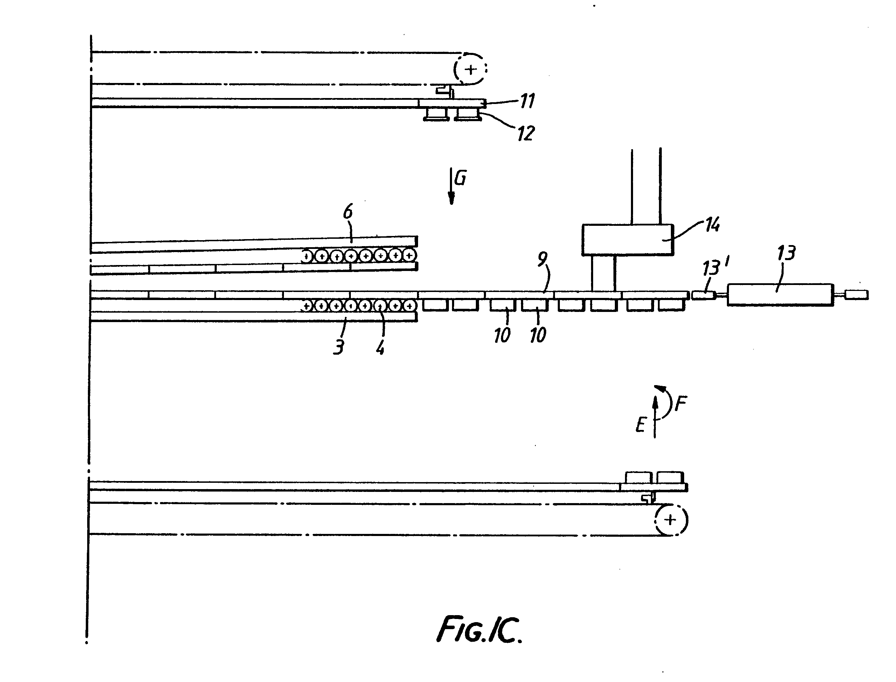

As will further be apparent from fig 1 the distance between the supporting mechanism formed by the rolls 4 and the supporting mechanism formed by the rolls 7 gradually decreases from the right-hand end of the device into the direction of the left-hand end of the device after which it remains constant. Near the right-hand end of the device there is provided a pair of setting cilinders 13, the outer ends of the piston pins 13' protruding from the cilinders 13 engaging the outer ends of a plate 9.

The stroke of the setting cilinders 13 substantially corresponds with the width of a plate 9, so that with every stroke of the setting cilinders 13 the plates 9 supported by the rolls 4 are moved into the direction according to arrow A over a distance which at least substantially corresponds with the width of a plate 9.

Furthermore there is arranged a mechanism 14 at the right-hand end of the device by means of which the curd can be supplied to the cheese vats 10.

At some distance under the beams 3 angle irons 15, extending into the longitudinal direction of the frame, are fixed to the frame, Across said angle irons the plates 9 can be moved, by means of setting cilinders 16 arranged near the left-hand side of the device, into a direction opposite to arrow A.

In a similar manner, at some distance above the frame beams 6 supporting the rolls 7, angle irons 17, extending into the longitudinal direction of the frame, are fixed to the frame. Across said angle irons the plates 11 supporting the followers can be moved by means of setting cilinders 18 arranged at the left-hand side of the device, seen in fig 1.

The plates 11, moving from between the rolls 4 and 7 into the direction according to arrow A at the left-hand side of the device, seen in fig 1, are lifted by means of a lifting mechanism, not shown, and moved upward into the direction according to arrow B to the level of the setting cilinders 18, after which the lifted plate 11 is pushed on the angle irons 17 by means of the setting cilinders 18.

The plates 9 carrying the cheese vats 10 are moved another step into the direction according to arrow A at the left-hand end of the device, as will be apparent from fig 1 and moved downward there by means of a lifting and tipping mechanism, only diagrammatically illustrated, into the direction according to arrow C and simultaneously turned 180°, as indicated by means of the arrow D. When the tipped plate 9 has reached its lowest position at the level of the setting cilinders 16 the cheeses present inside the vats 10 will be pressed out of the cheese vat 10 e.g. by blowing air into the cheese vats by means of the tipping mechanism. The cheeses pressed out of the cheese vats land on a belt conveyor 19 by means of which the cheeses formed can be discharged.

Then the plates 9 can be pushed on the angle irons 15 by means of the setting cilinders 15.

The plates 9 and 11 moved across the angle irons 15 and 17 by the setting cilinders 16 and 18 are pushed in steps through washing tanks 20 supported by the frame, in which tanks there are provided sprinkler lines 21 extending transversely to the direction of displacement of the plates, sprinklers being mounted on said lines by means of which a washing fluid can be sprayed, both from below and from above, against the plates 9 and 11 and the cheese vats 10 and the followers 12 respectively.

After having left the washing tanks 20 the plates 9 will lie above an endless conveyor chain 23, to which catches 24 are fixed which co-operate with catches 25 fixed to the plates 9 for moving the plates 9 in that manner towards the right-hand end of the device, seen in fig 1. Near said right-hand end of the device there is arranged a lifting and tipping mechanism, not shown, by means of which the plates 9 can be moved upward into a direction according to arrow E and simultaneously be turned 180° again (arrow F), to be thus arranged in the desired position at the level of the setting cilinders 13 again.

In a similar manner the plates 11 carrying the followers 12 will lie under an endless conveyor chain 26 after having left the washing tank 20, said conveyor chain being provided with catches 27 which co-operate with catches 28 fixed to the plates 11. The plates 11 are thus transported by means of the conveyor chain 26 toward the right-hand end of the device, seen in fig 1, where a lifting device, not shown, is provided by means of which the plates 11 can be moved downward into the direction according to arrow G, to be placed again, together with the followers 12, on a plate 9 with cheese vats 10 filled with curd. The combination of the two plates 9 and 11 thus formed is then moved between the supporting mechanisms formed by the rolls 4 and 7 into the direction according to arrow A again, whereby in the first part of the device the followers 12 are gradually pressed deeper into the cheese vats 10 in order to press the whey out of the curd and ·raise the pressure on the curd to the desired level. In the last part of the device, seen in the direction of displacement according to arrow A, the distance between the supporting mechanisms formed by the rolls 4 and the rolls 7 remains at least substantially the same, so that a substantially constant pressure on the curd can be maintained for the duration required.

The supporting mechanism formed by the rolls 7 can be subdivided into a number of sections located behind each other, seen in the longitudinal direction of the device according to arrow A, whilst in each of these sections the pressure exerted on the curd during operation can be influenced by adjusting the air pressure in the bellows 8 supporting the relevant sections.

## Claims

1. Device for pressing cheeses, provided with a frame (1,2) and with means (13) for moving vats (10) filled with curd and followers (12) placed on the vats through the device, characterized in that a supporting mechanism (3,4) for the vats (10) is provided in the frame along which supporting mechanism (3,4) the vats (10) can be moved through the frame, whilst above the supporting mechanism there is provided a second supporting mechanism (6,7) for supporting the followers (12), which can be moved along under said second supporting mechanism (6,7) whereby the construction is such that over at least part of the length of said supporting mechanisms (3,4;6,7) the distance between the supporting mechanisms gradually decreases.

2. Device according to claim 1, characterized in that the supporting mechanisms (3,4;6,7) are provided with rolls (4;7) which are freely rotatable about axes of rotation extending horizontally and perpendicularly to the aimed directions of displacement (A) of the vats (10) and which co-operate with plate-shaped parts (9,11) supporting the vats (10) and followers (12).

3. Device according to claim 2, characterized in that a plateshaped part support (9,11) several cheese vats (10) and several followers (12) respectively.

4. Device according to any one of the preceding claims, characterized in that setting cilinders (13) are provided near an outer end of the device, by means of which cilinders the cheese vats (10) and the followers (12) resting thereon are moved through the device.

5. Device according to any of the preceding claims, characterized in that the second supporting mechanism (6,7) is subdivided into a number of sections, which are suspended from inflatable bellows (8).

6. Device according to any one of the preceding claims, characterized in that near both ends of the device mechanisms are provided for displacing the cheese vats in vertical direction and tipping them 180°.

7. Device according to any one of the preceding claims, characterized in that near both ends of the device means are provided for displacing the followers in vertical direction.

8. Device according to any one of the preceding claims, characterized in that above and under the supporting mechanisms (3,4;6,7) there are provided guideways (15,17) along which the vats and the followers can be moved.

9. Device according to any one of the preceding claims, characterized in that above and under the supporting mechanisms (3,4;6,7) there are arranged washing devices (20,22) for cleaning the cheese vats (10) and the followers (12).

FIG.IA.

27
26
28
11
6
A
3 4
9
25
24 23

FIG.1B.

0 266 013

FIG.IC.

0 266 013

*FIG.2.*